(19) Europäisches Patentamt
European Patent Office
Office européen des brevets

(11) Publication number : **0 586 181 A2**

(12) **EUROPEAN PATENT APPLICATION**

(21) Application number : **93306714.2**

(22) Date of filing : **24.08.93**

(51) Int. Cl.[5] : **C08K 3/22,** C08L 79/08, C08K 7/08

(30) Priority : **31.08.92 JP 255766/92**

(43) Date of publication of application : **09.03.94 Bulletin 94/10**

(84) Designated Contracting States : **DE ES FR GB IT NL**

(71) Applicant : **GE PLASTICS JAPAN LIMITED**
**7-2, 3-Chome, Nihonbashi-Honcho**
**Chuo-Ku, Tokyo (JP)**

(72) Inventor : **Kosaka, Kazsuhige**
**2-2 Kinugaoka**
**Mooka-shi, Tochigi Prefecture (JP)**
Inventor : **Kitamura, Takuo**
**2-2 Kinugaoka**
**Mooka-shi, Tochigi Prefecture (JP)**

(74) Representative : **Pratt, Richard Wilson et al**
**London Patent Operation G.E. Technical Services Co. Inc. Essex House 12/13 Essex Street**
**London WC2R 3AA (GB)**

(54) **Thermoplastic polyester elastomer resin compositions.**

(57) Thermoplastic polyester elastomer resin compositions having an excellent impact resistance, a small coefficient of linear expansion, and a good oil resistance, moldability and molding surface appearance contain 1-100 parts by weight of acicular titanium oxide per 100 parts by weight of the thermoplastic polyester elastomer resin which is prepared by an esterification/condensation reaction using one or more poly(oxyalkylenediamines) and one or more tricarboxylic acids, or derivatives thereof.

EP 0 586 181 A2

This invention relates to thermoplastic polyester elastomers. More specifically, it relates to thermoplastic polyester elastomer resin compositions having an excellent impact resistance, a small coefficient of linear expansion, and a good oil resistance, moldability, and molding surface appearance.

Because polyester elastomer resins have excellent mechanical properties, heat resistance, chemical resistance and impact resistance, they are widely used as materials in automotive parts and electrical components. Further growth in their applications is anticipated.

However, because of the relatively large coefficient of linear expansion, such thermoplastic polyester elastomer resins have a poor dimensional accuracy. Hence, it has been impossible to employ these resins in applications such as automobile exterior panels, which require not only a suitable rigidity and impact resistance, but also dimensional stability.

In order to enhance the dimensional stability of such polyester elastomer resins, powdered or scale-like inorganic fillers such as calcium carbonate, talc or mica, or fibrous inorganic fillers such as glass fibers, carbon fibers or potassium titanate whiskers have been suitably selected and used in an attempt to improve the thermoplastic polyester elastomer resins.

However, powdered or scale-like inorganic fillers such as calcium carbonate, talc or mica do not have an adequate lowering effect on the coefficient of linear expansion of the resin; moreover, these lower the impact strength.

Because glass fibers have an inferior alkali resistance, there are limitations on the use of moldings obtained with glass fibers. Carbon fibers have the advantage that long fibers can readily be obtained and that the chemical resistance is good, but these are expensive and thus inferior in terms of cost-effectiveness.

Also, resins in which this type of fibrous reinforcing agent has been formulated have a large anisotropy and a rough surface, resulting in a decreased luster. Another drawback of this type of fiber-reinforced resin is that it abrades processing equipment, molding equipment and dies.

The potassium titanate fibers that have been proposed recently can be obtained as relatively long fibers, and have an excellent resistance to chemicals, but because they tend to break, such fibers do not provide a reinforcing effect as large as the apparent fiber length. Moreover, because they include potassium components, this can have an adverse effect on the plastic properties.

Moreover, in cases where the filler also serves as a colorant, because the coloring effects of the filler itself are small, the amount of addition necessarily becomes larger. This invites a decline in strength, in addition to which the cost effectiveness also decreases.

This invention sets out to resolve the drawbacks of the prior art, and to provide thermoplastic polyester elastomer resin compositions having an excellent impact resistance, a small coefficient of linear expansion, an excellent oil resistance, and a good moldability as well as a good surface appearance in the molded articles.

This aim is achieved by means of thermoplastic polyester elastomer resin compositions which contain 1-100 parts by weight of acicular titanium oxide per 100 parts by weight of thermoplastic polyester elastomer resin prepared by means of an esterification/condensation reaction using one or more poly(oxyalkylenediamines) and one or more tricarboxylic acids, or derivatives thereof.

When the surface of the acicular titanium oxide is pretreated with a coupling agent, an even better thermoplastic polyester elastomer resin composition can be obtained.

The thermoplastic polyester elastomer resins used in this invention can be prepared from one or more poly(oxyalkylenediamines) and one or more tricarboxylic acids, or derivatives thereof, by means of an esterification/condensation reaction.

The poly(oxyalkylenediamine) used in this invention can be represented by the formula

$$H_2N\text{-}G\text{-}NH_2$$

(where G is the group remaining after removal of the amino group on the long-chain alkylene ether diamine). These polyether primary diamines are sold under the trademark Jeffamine (Texaco Chemical).

These are generally prepared by a known method for aminating glycols. For example, as cited in the specification of Belgium Patent No. 634,741, these can be prepared by aminating glycols with ammonia in the presence of a Raney nickel catalyst and hydrogen. According to another method, as disclosed in the specification of U.S. Patent No. 3,654,370, these can be prepared by the treatment of glycols with ammonia and hydrogen over a nickel-copper-chromium catalyst.

Long-chain ether glycols suitable for use in the preparation of polyoxyalkylene diamines are polymeric glycols having terminal (or as close to terminal as possible) hydroxy groups and a molecular weight of about 600-5000. These long-chain ether glycols generally have a carbon/oxygen ratio of about 1.8-4.3.

Typical long-chain ether glycols include poly(alkylene ether) glycols such as poly(ethylene ether) glycol, poly(propylene ether) glycol and poly(tetramethylene ether) glycol; random or block copolymers of ethylene oxide and propylene oxide such as propylene oxide- and poly(propylene oxide)-terminal poly(ethylene ether) glycols, as well as random or block copolymers of ethylene oxide, propylene oxide, and methyl tetrahydrofuran

(used in a proportion where the carbon-oxygen molar ratio in the glycol does not exceed about 4.3).

The polyformal glycol prepared by a reaction between formaldehyde, 1,4-butanediol, and 1,5-pentanediol is also useful. Particularly desirable poly(alkylene ether) glycols are poly(ethylene ether) glycols that have been end-blocked with poly(propylene ether) glycol, poly(tetramethylene ether) glycol and poly(propylene ether) glycol and/or propylene oxide.

In general, the polyoxyalkylene diamines used within the range of this invention have an average molecular weight of about 600-5000.

The tricarboxylic acid (d) may be virtually any carboxylic anhydride that contains a carboxyl group, or an acid corresponding to these carboxylic anhydrides that contains two imide-forming neighboring carboxyl groups in place of the anhydride group. Mixtures thereof are also appropriate. The third carboxyl group must be one capable of forming an ester, and preferably one that undergoes virtually no imidization.

The use of trimellitic anhydride as the tricarboxylic acid component is preferable, although many other tricarboxylic acid components will be evident to those conversant with the art. These components include 2,6,7-naphthalene tricarboxylic anhydride, 3,3',4-diphenyltricarboxylic anhydride, 3,3',4-benzophenone tricarboxylic anhydride, 1,3,4-cyclopentane tricarboxylic anhydride, 2,2',3-diphenyltricarboxylic anhydride, diphenylsulfone-3,3',4-tricarboxylic anhydride, ethylene tricarboxylic anhydride, 1,2,5-naphthalene tricarboxylic anhydride, 1,2,4-butane tricarboxylic anhydride, diphenylisopropylidene-3,3',4-tricarboxylic anhydride, 3,4-dicarboxyphenyl-3-carboxylphenylene ether anhydride, and 1,3,4-cyclohexanetricarboxylic anhydride.

These tricarboxylic acids are expressed by the following formula

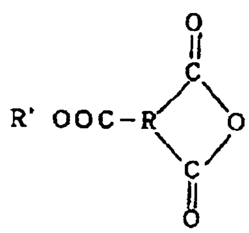

(where R is a trivalent organic group, and preferably an aliphatic, aromatic or alicyclic trivalent organic group with 1-20 carbons; R' is preferably hydrogen or a monovalent organic group selected from among fatty acid and/or alicyclic groups having 1-6 carbons, and aromatic groups having 6-12 carbons such as benzyl, and most preferably hydrogen).

In the polyester elastomer compositions according to this invention, the polyester elastomer consists of 30-70 wt% of a polyester elastomer in which the melting point of the polyester hard segments is no more than 213°C and 70-30 wt% of a polyester elastomer in which the melting point of the polyester hard segments is higher than 213°C. By means of this, it is possible to obtain polyester elastomer compositions having both an excellent low-temperature impact resistance that has not hitherto been achievable and also an excellent high-temperature rigidity.

The acicular titanium oxide used in this invention essentially consists of $TiO_2$, and the shape is acicular. Here, "acicular" includes fibrous, columnar and other similar shapes. It is preferable that this shape be such that the average diameter along the major axis is no more than 5 microns, and preferably no more than 3 microns, and the major axis/minor axis ratio is at least 3, and preferably at least 5.

When the average major axis is more than 5 microns, the degree of interlocking between the fibers increases, which is undesirable. In addition, starting with the problem of asbestos fiber carcinogenicity, the carcinogenicity arising from the shape of fibrous substances has recently been pointed out (Stanton-Pott hypothesis; for example, see *J. Natl. Cancer Int.* **58**, pp. 587-603 (1977); *J. Natl. Cancer Int.* **67**, pp. 965-975 (1981); *Proc. WHO/IRAC Conf.* **1982**, No. 2, pp. 286-302 (1984); and "All about asbestos substitutes," *Nihon Kankyo Center Kanshu,* 211-284 (1989). From the standpoint of safety and hygiene, it is not desirable to use fine fibers having an average major axis diameter greater than 5 microns. The acicular titanium oxide in this invention is entirely composed (100%) of rutile crystals. As such, it has a high hardness and does not readily break; moreover, it has an excellent resistance to chemicals and heat.

As cited in Japanese Published Examined Patent Application [Kokoku] No. 47-44,974 (1972), for example, the acicular titanium oxide can be obtained by mixing rutile $TiO_x$, an alkali metal salt such as sodium chloride, and an oxyphosphorus compound, then firing at 725-1000°C. This can also be obtained by mixing $TiO_x$, a zinc compound, an alkali metal compound, and a phosphate compound, as described in Kokoku No. 45-18,370 (1970).

In cases where acicular titanium oxide is obtained as a mixture of long and short crystals , this is administered treatment such as classification and grinding, then is sorted. It is desirable that at least 70 wt% of the acicular titanium oxide have a minor axis diameter of 0.02-0.5 micron and a major axis diameter of 0.5-5 microns. Prior to use, it is generally preferable to fire the acicular titanium oxide obtained in this manner, then to remove the soluble salts by a means such as leaching in water. Complete removal of the soluble salt is difficult, and so the acicular titanium oxide of this invention may contain a small amount of impurities.

Although fibrous titanium oxide obtained by treating fibrous potassium titanate in an aqueous acid solution so as to extract the potassium component has been proposed, sufficient removal of the potassium component by this method is difficult. Because the fibrous titanium oxide obtained by this means is unable to retain the following fibrous shape and is in particular porous, the strength of the fibers themselves is highly inferior and the fibers readily break, making this inappropriate as a reinforcing material for the resin compositions of the present invention.

It is desirable to use as this type of acicular titanium oxide one that has been surface-treated with a coupling agent such as a silane coupling agent or an epoxy coupling agent. Where necessary, various kinds of rubber components or other components may be added to the compositions of this invention.

Examples

This invention shall now be illustrated more concretely by means of examples. The thermoplastic polyester elastomer resin was obtained by compounding the various reinforcing materials or fillers shown in Table I in the indicated amounts per 100 parts by weight of LOMOD™ (GE Plastics Japan); this resin was melt-kneaded using a single-screw vented extruder having a diameter of 50 mm and set at 240°C, thereby forming pellets.

**Table 1**

| | Examples | | | Comparative Examples | | | |
|---|---|---|---|---|---|---|---|
| | 1 | 2 | 3 | 1 | 2 | 3 | 4 |
| **Composition:** | | | | | | | |
| Polyester elastomer | 100 | 100 | 100 | 100 | 100 | 100 | 100 |
| Acicular titanium oxide | 15 | 20 | 30 | | | | |
| Glass fibers | | | | 20 | | | |
| Carbon fibers | | | | | 20 | | |
| Talc | | | | | | 20 | |
| Potassium titanate | | | | | | | 20 |
| **Properties:** | | | | | | | |
| High-velocity impact test | D | D | D/B | B | B | B | D |
| Coefficient of linear expansion | 9.5 | 7.5 | 7.5 | 7.2 | 7.0 | 8.0 | 7.5 |
| Appearance of moldings | O | O | O | × | × | Δ | O |
| Thermal stability | O | O | O | O | O | O | × |

High-Velocity Impact Test: D: ductile fracture B: brittle fracture

Appearance: O: good Δ: somewhat poor ×: poor

Thermal Stability: O: small ratio of change ×: large ratio of change

FTL-200™ (Ishihara Sangyo Kaisha) was used as the acicular titanium oxide in this example. The glass fibers used in the comparative examples were chopped-strand glass having a diameter of 13 microns and the surface of which had been epoxy silane coupling-treated. "Besphite"* HTA (Toho Rayon) was used as the carbon fiber, and LMS-100 (Fuji Talc) was used as the talc. TISMO-D102 (Otsuka Chemical Co.) was used as the potassium titanate fiber.

After drying the pellets thus obtained for 4 hours at 120°C, test pieces were fabricated with an 80-ton injection molding machine set at 240°C at a mold temperature of 60°C. The tests carried out in the examples of this invention and the comparative examples were as follows.

High-Velocity Impact Test:

Impactor diameter: 1/2 inch
Bottom hole diameter: 1 inch
Punching rate: 5 m/s
Test temperature: -30°C
Test piece thickness: 3 mm

Coefficient of Linear Expansion Test:

ASTM: D-696

Measured temperature: -30° to 80°C

Appearance of Molded Pieces: (visual)

Heat Stability: The melt index (MI) with 10 minutes of retention at 250°C and the MI measured without retention at 250°C were compared, and the percent change was determined.

Advantages of the Invention

By means of this invention, thermoplastic polyester elastomer resin compositions can be obtained which have an excellent impact resistance and oil resistance and a small coefficient of linear expansion, and which provide a good surface appearance in the molded articles.

## Claims

**(1)** A thermoplastic polyester elastomer resin composition containing 1-100 parts by weight of acicular titanium oxide per 100 parts by weight of a thermoplastic polyester elastomer resin prepared by an esterification/ condensation reaction using one or more poly(oxyalkylene diamines) and one or more tricarboxylic acids, or derivatives thereof.

**(2)** A thermoplastic polyester elastomer resin composition according to Claim 1, whereby the surface of said acicular titanium oxide has been pretreated with a coupling agent.